# EUROPÄISCHE PATENTANMELDUNG

(11) **EP 4 311 663 A1**
(43) Veröffentlichungstag der Anmeldung: **31.01.2024**
(21) Anmeldenummer: 22186613.0
(22) Anmeldetag: 25.07.2022
(51) Int. Cl.: B32B 5/02, B32B 5/26, B32B 7/06, B32B 7/12, B32B 19/06, H01M 50/20

(54) **MEHRSCHICHTIGES SCHUTZELEMENT FÜR EINE BATTERIE**

(71) Anmelder: Henkel AG & Co. KGaA, 40589 Düsseldorf (DE)
(72) Erfinder: Otte, Stefan, 37075 Göttingen (DE); Calixto de Araujo, Roger, 50737 Köln (DE); Jaehnichen, Mathias, 69234 Dielheim (DE); Bonk, Carsten, 40589 Düsseldorf (DE); Froehlich, Tim, 40217 Düsseldorf (DE)
(74) Vertreter: Wagner Albiger & Partner Patentanwälte mbB

(57) **Zusammenfassung**

Die Erfindung betrifft ein mehrschichtiges Schutzelement (20) für eine Batterie (1) mit wenigstens zwei Batteriezellen (10), die nebeneinander angeordnet sind, wobei das Schutzelement (20) zwischen den Batteriezellen (10) angeordnet werden kann, und wobei das Schutzelement (20) eine kompressible Kernschicht (21) aufweist. Erfindungsgemäß ist vorgesehen, dass die Kernschicht (21) pflanzliche oder tierische Wolle umfasst. Die Erfindung betrifft auch eine Batterie (1) und die Verwendung des Schutzelements (20) für eine Batterie (1)

## Beschreibung

Die Erfindung betrifft ein mehrschichtiges Schutzelement für eine Batterie, die wenigstens zwei Batteriezellen umfasst. Zudem betrifft die Erfindung eine Batterie mit dem mehrschichtigen Schutzelement sowie die Verwendung des Schutzelements als Zwischenlage zwischen zwei Batteriezellen.

Aus der US 10,840,494 B2 ist eine Batterie mit mehreren prismatischen Batteriezellen in Form von flachen Quadern bekannt, die an ihren größeren Seitenflächen angrenzend nebeneinander angeordnet sind. Ausgehend von einem nicht geladenen Zustand dehnen sich die einzelnen Batteriezellen beim Aufladen aus, wobei die Dicke der einzelnen Batteriezelle, also der Abstand zwischen den beiden größeren Seitenflächen, größer wird. Die Ausdehnung der einzelnen, nebeneinander angeordneten Batteriezellen summieren sich zu einer Gesamtausdehnung der Batterie, die zu Problemen führen kann. Beispielsweise wenn die Batteriezellen in einem Batteriegehäuse untergebracht sind, kann sich bedingt durch die Ausdehnung der einzelnen Batteriezellen das Batteriegehäuse plastisch verformen und ggf. beschädigt werden. Zur Kompensation der Ausdehnung der Batteriezellen weist das zwischen zwei benachbarten Batteriezellen angeordnete Schutzelement gemäß der US 10,840,494 B2 eine kompressible Kernschicht auf. Bei Ausdehnung der Batteriezellen wird diese Kernschicht zusammengedrückt, sodass sich die Gesamtdicke des Batteriepakets, bestehend aus den einzelnen Batteriezellen und den dazwischen angeordneten Schutzelementen, bei Aufladung der Batterie praktisch nicht ändert. Als Material für die Kernschicht wird Kunststoff mit vergleichsweise geringer Shore-Härte vorgeschlagen.

Neben der Kompensation der Ausdehnung der Batteriezellen muss das Schutzelement auch eine thermisch und elektrisch abschirmende Funktion erfüllen. Insbesondere Lithium-Ionen-Batterien weisen aufgrund ihrer chemischen Zusammensetzung eine hohe Instabilität auf. So führt ein lokaler Kurzschluss zwischen den internen Elektroden einer Batteriezelle zu einem starken Kurzschlussstrom, der die betreffende Batteriezelle in kurzer Zeit extrem aufheizt. Dieses thermische Durchgehen ("thermal runaway") einer Batteriezelle kann leicht bzw. schnell auf benachbarte Batteriezellen übergreifen. Dies führt zu einer Kettenreaktion, wobei die in der Batterie gespeicherte Energie explosionsartig freigesetzt wird. Diese explosionsartige Energiefreisetzung kann mit giftigen Gasen und Flammen- und Funkenbildung einhergehen. Deswegen sollte das Schutzelement eine geringe thermische Leitfähigkeit, eine hohe elektrische Durchschlagsfestigkeit und eine hohe thermische (Brand-)Beständigkeit aufweisen.

Zudem sollten Batterien bzw. deren Bauteile einfach zu recyceln sein. Bei der Entsorgung einer Alt-Batterie lässt sich ein mehrschichtiges Schutzelement möglicherweise zum Recyceln von einer Batteriezelle trennen, doch wenn die einzelnen Schichten des Schutzelements aus unterschiedlichen Kunststoffen besteht, ist ein umweltschonendes Recyceln des Schutzelements nicht möglich.

Der Erfindung liegt daher die Aufgabe zu Grunde, ein Schutzelement für eine Batterie bereitzustellen, dass kompressibel und wärmeisolierend ist, eine große elektrische Durchschlagsfestigkeit aufweist und möglichst umweltverträglich ist.

Die der Erfindung zu Grunde liegende Aufgabe wird mit der Merkmalskombination gemäß Anspruch 1 gelöst. Ausführungsbeispiele der Erfindung können den Unteransprüchen zu Anspruch 1 entnommen werden.

Erfindungsgemäß ist vorgesehen, dass die kompressible Kernschicht pflanzliche oder tierische Wolle umfasst. In einem bevorzugten Ausführungsbeispiel wird Schafwolle verwendet. Durch die Verwendung von Wolle für die kompressible Kernschicht lassen sich Schutzelemente (auch als Batterie-Kompressionspads bekannt) bereitstellen, die sich einerseits gut zusammendrücken lassen und ein gutes Kompressionsverhalten aufweisen. Andererseits lässt sich eine sehr gute Wärmeisolierung mit geringen thermische Leitfähigkeiten unterhalb von 0,05 W/mK realisieren. Zudem ist die Verwendung von Wolle umweltverträglich. Wolle ist ein natürliches und nachwachsendes Produkt lässt sich gut recyceln. Beispielsweise kann die gebauchte Schafwolle als Dünger verwendet werden.

Als weitere tierische Wollsorten können neben der Schafwolle die Angorawolle, Mohairwolle, Kaschmirwolle und die Alpakawolle genannt werden. Ein Beispiel für pflanzliche Wolle ist Baumwolle.

Die Kernschicht kann bis zu 80 % , 90 % oder gar zu 100 % aus Wolle bestehen. Die Kernschicht kann ein Vlies mit mehreren Schichten sein, welche übereinander gelegt oder gefaltet werden. Die Kernschicht kann auch durch Filzen hergestellt werden. Beim Filzen wird die Eigenschaft der Wollfäden genutzt, sich ineinander zu verhaken. Insbesondere reine Schurwolle ist schwer entflammbar und weist hervorragende Wärmeisolationswerte auf. Es ist auch möglich, dass sich die Woll-Kernschicht aus verschiedenen Unterschichten zusammensetzt. Beispielseweise kann die Kernschicht ein erste Vliesschicht und ein zweite Vliesschicht sowie eine Filzschicht aufweisen, die zwischen den beiden Vliesschichten angeordnet ist.

Die Kernschicht kann ein Flächengewicht von 80 bis 1800 g/m² aufweisen. Bevorzugte Flächengewichte liegen zwischen 100 und 1000 g/m² oder gar zwischen 200 und 800 g/m². Eine Schichtdicke der kompressiblen Kernschicht (im unbelasteten Zustand) kann 0,9 bis 12 und bevorzugt 1,5 bis 10 mm betragen. Die Gesamtdicke des Schutzelements kann 0,9 bis 12 mm betragen. In einem Ausführungsbeispiel beträgt die Gesamtdicke 1,0 bis 10,5 mm.

In einem Ausführungsbeispiel wird die Gesamtdicke des Schutzelements maßgeblich durch die Schichtdicke der Kernschicht bestimmt. Die Schichtdicke der Kernschicht kann 60 bis 90 % von der Gesamtdicke des Schutzelements betragen.

Das mehrschichtige Schutzelement kann wenigstens eine erste Barriereschicht ausweisen, die vorzugsweise Glimmer (Mica) umfasst. Glimmer ist wärmenbeständig und brandfest. Glimmer soll nicht für ein einzelnes bestimmtes Mineral stehen, sondern für eine Gruppe von Mineralien, der sogenannten Glimmergruppe, deren Gemeinsamkeit die chemische Zusammensetzung und der Kristallgitterbau ist.

Das Schutzzelement kann eine zweite Barriereschicht aufweisen, wobei die Kernschicht zwischen den beiden Barriereschichten angeordnet sein kann. Einer der zwei termischen Barriereschichten kann eine erste äußere Schicht des Schutzelements darstellen.

Eine zweite äußere Schicht des Schutzelements kann durch eine Klebstoffschicht gebildet sein. Diese Klebstoffschicht kann eine schützende Abziehfolie umfassen, die vor der Verklebung mit einer Batteriezelle abgezogen werden muss. Wenn die erste äußere Schicht nicht klebend ausgebildet ist, können bei der Herstellung der Batterie die einzelnen Batteriezellen einseitig mit der zweiten äußeren Schicht des Schutzelements beklebt werden. Da die erste äußere Schicht nicht klebend ausgebildet ist, können die jeweils mit einem Schutzelement versehenen Batteriezellen als Paket nebeneinander angeordnet werden und erst danach zueinander exakt ausgerichtet werden.

Ein weitere Aufgabe der Erfindung, die Bereitstellung einer zuverlässigen, sicheren und umweltschonenden Batterie, wird mit Anspruch 9 gelöst. Entsprechend wird eine Batterie mit wenigstens zwei Batteriezellen vorgeschlagen, zwischen denen ein mehrschichtiges Schutzelement nach einem der Ansprüche 1 bis 8 angeordnet ist. Das Schutzelement kann dabei Ausgestaltungen annehmen, wie sie der vorliegenden Offenbarung zu entnehmen ist. Zumindest eine der Batteriezellen kann eine prismatische Grundform und bevorzugt eine quaderförmige Grundform aufweisen. Die Batteriezelle kann auch in Form eines Pouches (Kissen) ausgebildet sein. Bevorzugt weisen alle Batteriezellen der Batterie die prismatische Grundform auf. In einem Ausführungsbeispiel sind alle Batteriezellen als Pouch ausgebildet.

Zudem wird erfindungsgemäß die Verwendung eines mehrschichtigen Schutzelements nach einem der Ansprüche 1 bis 8 als Zwischenlage zwischen zwei Batteriezellen einer Batterie vorgeschlagen.

Anhand der in den Figuren dargestellten Ausführungsbeispiele wird die Erfindung näher erläutert. Es zeigen:
- Figur 1: schematisch eine Batterie mit mehreren Batteriezellen und mehreren Schutzelementen zwischen den Batteriezellen; und
- Figur 2: exemplarisch den Schichtaufbau eines Schutzelements.

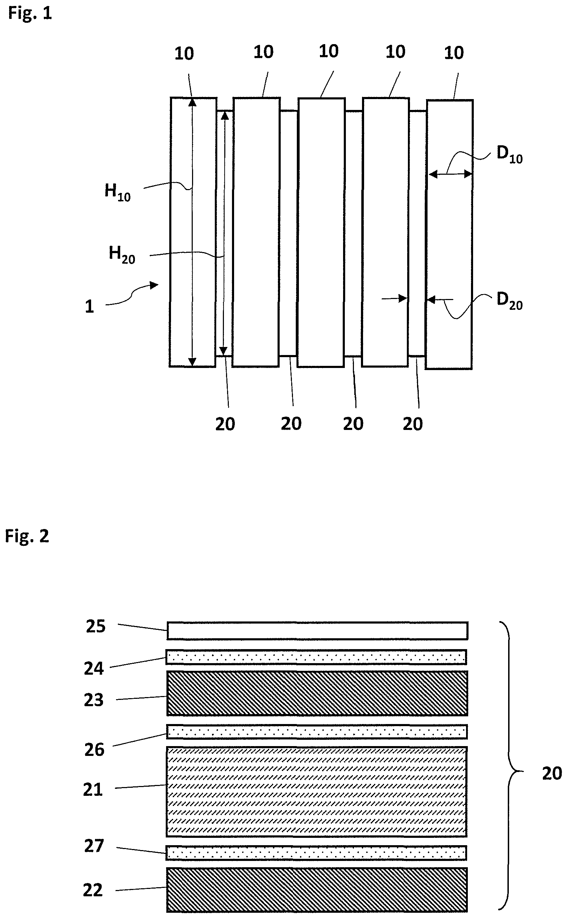

Figur 1 zeigt schematisch eine Batterie, die in ihrer Gesamtheit mit 1 bezeichnet wird. Es kann sich beispielsweise um eine Batterie handeln, die zum Antrieb eines Elektrofahrzeugs dient.

Die Batterie 1 umfasst mehrere Batteriezellen 10. In Figur 1 sind fünf Batteriezellen 10 dargestellt, die Batterie 1 kann weniger Batteriezellen oder mehr Batteriezellen (beispielsweise zehn Batteriezellen) aufweisen. Jede Batteriezelle 10 hat eine quaderförmige Grundform. Eine Höhe H₁₀ einer jeden Batteriezelle 10 kann beispielsweise 50 bis 200 mm betragen. Eine Breite, welche sich in der Darstellung der Figur 1 in die Zeichenebene erstreckt, kann beispielsweise Werte zwischen 50 und 300 mm annehmen. Eine Dicke der Batteriezelle 10 ist mit D₁₀ bezeichnet und kann beispielweise 10 bis 50 mm betragen.

Zwischen zwei benachbarten Batteriezellen 10 ist jeweils ein Schutzelement 20 angeordnet. Eine Dicke D₂₀ eines jeden Schutzelements 20 beträgt in bevorzugten Ausführungen 3 bis 8 mm. Die räumliche Erstreckung des Schutzelements 20 (Höhe und Breite) kann der räumlichen Erstreckung der Batteriezelle 10 entsprechen. Im Ausführungsbeispiel der Figur 1 ist die Höhe H₂₀ des Schutzelements 20 geringfügig kleiner als die Höhe H₁₀ der Batteriezelle 10.

Figur 2 zeigt den Schichtaufbau des Schutzelements 20. Die einzelnen Schichten des mehrschichtigen Schutzelements 20 sind der Übersicht halber voneinander beabstandet dargestellt. Wie auch Figur 1 ist Figur 2 keine maßstabsgetreue Zeichnung.

Das Schutzelement 20 weist eine kompressible Kernschicht 21 aus Schafwolle auf. Die Kernschicht 21 ist angeordnet zwischen einer ersten Barriereschicht 22 und einer zweiten Barriereschicht 23, die jeweils Glimmer umfassen. Die erste Barriereschicht 22 stellt dabei eine erste äußere Schicht des Schutzelements 20 dar.

Die zweite Barriereschicht 23 liegt zwischen der Kernschicht 21 und einer Klebstoffschicht 24, die eine Abziehfolie 25 umfasst. Die Klebstoffschicht 24 (mit der Abziehfolie 25) bilden eine zweite äußere Schicht des Schutzelements 20. Zwischen den Barriereschichten 22, 23 und der Kernschicht 21 sind weitere Klebstoffschichten 26, 27 vorgesehen.

Um das Schutzelement 20 an eine Batteriezelle 10 zu kleben, wird die Abziehfolie 25 abgezogen, sodass der Klebstoff der Klebstoffschicht 24 freigelegt wird und die Klebstoffschicht 24 und auf die betreffende Batteriezelle 10 gelegt werden kann. Die Batteriezelle 10 und das darauf anhaftende Schutzelement 10 bilden dann eine Einheit, die dann mit anderen derart erzeugten Einheiten im Paket/Stapel nebeneinander angeordnet werden können. Da die äußeren Flächen einer jeden Einheit nicht klebend sind, können die Einheiten noch zueinander ausgerichtet werden, auch wenn sie sich bereits im Paket bzw. im Stapel befinden.

### Bezugszeichenliste

- 1: Batterie

- 10: Batteriezelle

- 20: Schutzelement
- 21: Kernschicht
- 22: erste Barriereschicht
- 23: zweite Barriereschicht
- 24: Klebstoffsicht
- 25: Abziehfolie
- 26: Klebstoffschicht
- 27: Klebstoffschicht

## Patentansprüche

1. Mehrschichtiges Schutzelement (20) für eine Batterie (1) mit wenigstens zwei Batteriezellen (10), die nebeneinander angeordnet sind, wobei das Schutzelement (20) zwischen den Batteriezellen (10) angeordnet werden kann, und wobei das Schutzelement (20) eine kompressible Kernschicht (21) aufweist, **dadurch gekennzeichnet, dass** die Kernschicht (21) pflanzliche oder tierische Wolle umfasst.

2. Schutzelement (20) nach Anspruch 1, dass die Kernschicht (21) Schafwolle umfasst.

3. Schutzelement (20) nach Anspruch 1 oder 2, dass die Kernschicht (21) ein Vlies oder ein Filz aus Wolle ist.

4. Schutzelement (20) nach einem der Ansprüche 1 bis 3, **dadurch gekennzeichnet, dass** die Kernschicht (21) ein Flächengewicht von 200 bis 1000 g/m2 aufweist.

5. Schutzelement (20) nach einem der Ansprüche 1 bis 4, **dadurch gekennzeichnet, dass** eine erste Barriereschicht (22) vorgesehen ist, die vorzugsweise Glimmer umfasst.

6. Schutzelement (20) nach Anspruch 5, **dadurch gekennzeichnet, dass** eine zweite Barriereschicht (23) vorgeshen ist, wobei die Kernschicht (21) zwischen der ersten Barriereschicht (22) und der zweiten Barriereschicht (23) angeordnet ist.

7. Schutzelement (20) nach Anspruch 6, **dadurch gekennzeichnet, dass** eine der zwei termischen Barriereschichten (22, 23) eine erste äußere Schicht des Schutzelements (20) darstellt.

8. Schutzelement (20) nach einem der Ansprüche 1 bis 7, **dadurch gekennzeichnet, dass** eine zweite äußere Schicht durch eine Klebstoffschicht (24) mit einer Abziehfolie (25) gebildet wird.

9. Batterie (1) mit wenigstens zwei Batteriezellen (10), zwischen denen ein mehrschichtiges Schutzelement (20) nach einem der Ansprüche 1 bis 8 angeordnet ist.

10. Verwendung eines mehrschichtigen Schutzelements (20) nach einem der Ansprüche 1 bis 8 zur Zwischenlage zwischen zwei Batteriezellen (10) einer Batterie (1).
